# EUROPÄISCHE PATENTSCHRIFT

(11) **EP 3 250 396 B1**
(45) Veröffentlichungstag und Bekanntmachung des Hinweises auf die Patenterteilung: **07.11.2018**
(21) Anmeldenummer: 16707478.0
(22) Anmeldetag: 03.03.2016
(51) Int. Cl.: B60B 17/00

(54) **VOLLRAD FÜR EIN SCHIENENFAHRZEUG UND VERFAHREN ZU DESSEN HERSTELLUNG**
SOLID WHEEL FOR A RAIL VEHICLE, AND METHOD FOR PRODUCING SAME
ROUE PLEINE DESTINÉE À UN VÉHICULE FERROVIAIRE ET PROCÉDÉ DE FABRICATION DE LADITE ROUE

(30) Priorität: 30.04.2015 AT 503492015
(43) Veröffentlichungstag der Anmeldung: 06.12.2017
(73) Patentinhaber: Siemens AG Österreich, 1210 Wien (AT)
(72) Erfinder: DE LA PRIDA CABALLERO, Ruben, 28015 Madrid (ES); STINE, Gerhard, 8055 Graz (AT); WEITENTHALER, Andreas, 8715 St. Margarethen bei Knittelfeld (AT); WEBER, Franz-Josef, 8054 Graz (AT)
(74) Vertreter: Maier, Daniel Oliver
(86) Internationale Anmeldenummer: PCT/EP2016/054529
(87) Internationale Veröffentlichungsnummer: WO 2016/173749

(56) Entgegenhaltungen:
- FR-A- 796 710
- GB-A- 526 518
- GB-A- 598 421

## Beschreibung

### Technisches Gebiet

Die Erfindung betrifft ein Vollrad für ein Schienenfahrzeug, umfassend einen am Umfang des Vollrades angeordneten Radkranz mit einer Lauffläche, welcher Radkranz über eine Stirnwand und eine Rückwand mit einer, im Zentrum des Vollrades angeordneten, eine Längsachse aufweisenden Nabe für eine Radsatzwelle verbunden ist, sowie ein Verfahren zur Herstellung eines Vollrads.

### Stand der Technik

Vollräder für Schienenfahrzeuge sind schon seit langem bekannt. Allerdings besteht nicht nur bei Vollrädern für Schienenfahrzeuge das Problem, dass Schallemissionen im Schienenverkehr unerwünscht sind, besonders im Fall von in der Stadt fahrenden Schienenfahrzeugen, wie Straßenbahnen oder U-Bahnen (Metros). Darüber hinaus bestehen immer Bestrebungen, die Masse der Räder möglichst gering zu halten.
Zur Verringerung von Schallemissionen sind Schallabsorber bekannt, die den Schall aufgrund ihrer Masse absorbieren, aber damit nur den direkten Schall dämpfen können und zusätzlich die Masse des Vollrades erhöhen. Eine andere Möglichkeit der Schalldämpfung sind aufwändig zu fertigende mehrteilige gummigefederte Räder.

Einige Beispiele von Vollräder für Schienenfahrzeuge sind aus den GB 526 518 A, FR 796 710 A und GB 598 421 A bekannt.

Aufgabe der Erfindung Es ist daher eine Aufgabe der Erfindung die Nachteile des Stands der Technik zu überwinden und ein Vollrad für ein Schienenfahrzeug vorzuschlagen, welches sich durch eine besonders hohe axiale und radiale Steifigkeit auszeichnet, um die Emission von direktem Schall zu vermindern. Des Weiteren soll die Erfindung eine lange Lebensdauer und ein geringes Gewicht des Vollrads ermöglichen.

### Darstellung der Erfindung

Diese Aufgabe wird für ein Vollrad für ein Schienenfahrzeug, umfassend einen am Umfang des Vollrades angeordneten Radkranz mit einer Lauffläche, welcher Radkranz über eine Stirnwand und eine Rückwand mit einer, im Zentrum des Vollrades angeordneten, eine Längsachse aufweisenden Nabe für eine Radsatzwelle verbunden ist, gemäß den Merkmalen des Patentanspruchs 1 so gelöst, dass das Vollrad einen von der Stirnwand und der Rückwand begrenzten Hohlraum ausbildet, wobei Stirnwand und Rückwand unter dem Radkranz gewölbeartig ineinander übergehen und wobei die Stirnwand erste Öffnungen und die Rückwand zweite Öffnungen aufweist, um den Hohlraum speichenartig nach außen zu öffnen.

Der Hohlraum ist zumindest unterhalb des Radkranzes gewölbeartig ausgebildet, das heißt, die Innenflächen der Stirn- und der Rückwand zeigen einen Verlauf wie die Innenseite der Rippen eines Gewölbes. Der Hohlraum hat somit zumindest unterhalb des Radkranzes keine Ecken oder Kanten, was für eine gute Stabilität sowohl in radialer als auch in axialer Richtung sorgt.

Entsprechend ist es auch sinnvoll, wenn die Innenflächen der Stirn- und der Rückwand oberhalb der Nabe ohne Ecken oder Kanten ineinander übergehen.

Die Öffnungen in Stirn- und Rückwand reduzieren das Gewicht des Vollrads zusätzlich zu dem Hohlraum und ermöglichen die Fertigung, vorzugsweise das Gießen, des Vollrades.

Durch die Öffnungen in der Stirn- und der Rückwand verbleiben von der Stirn- und der Rückwand nur mehr Speichen, welche die Funktion von Rippen in dem durch den Hohlraum gebildeten Gewölbe haben. Da die erfindungsgemäßen Speichen keine Speichen im allgemeinen Sinne sind, wie zuvor ausgeführt, können die Speichen auch als Rippen oder Verbindungselemente bezeichnet werden. Insofern kann vorgesehen sein, dass sich jeweils zwischen zwei ersten Öffnungen auf der Stirnwand eine erste Speiche und jeweils zwischen zwei zweiten Öffnungen auf der Rückwand eine zweite Speiche ausbildet, wobei die Speichen ihre kleinste Breite jeweils im mittleren Drittel der Speiche aufweisen. Die Breite der Speichen wird dabei in der Ebene der Stirn- bzw. Rückwand in Umfangsrichtung des Rades gemessen.

Mit anderen Worten weist die erste Speiche eine erste Verjüngung auf, welche - in radialer Richtung gesehen - im mittleren Drittel der die erste Speiche ausbildenden ersten Öffnungen angeordnet ist. Genauso weist die zweite Speiche eine zweite Verjüngung auf, welche - in radialer Richtung gesehen - im mittleren Drittel der die zweite Speiche ausbildenden zweiten Öffnungen angeordnet ist. Die Ausbildung einer kleinsten Breite der Speichen im mittleren Drittel entspricht einer bionischen Auslegung und bewirkt eine Spannungshomogenisierung in den Speichen. So wird ein lokal stark vergrößerter Spannungsgradient an jeder Stelle der Speiche verhindert, was insgesamt zu einer niedrigen Spannungskonzentration entlang der Speichen führt.

Dies kann unterstützt werden dadurch, dass sich die Speichen von ihrer kleinsten Breite in radialer Richtung sowohl nach innen als auch nach außen verbreitern.

Bezüglich der ersten Öffnungen, also jener in der Stirnwand, hat es sich als günstig erwiesen, wenn die ersten Öffnungen eine erste Symmetrieachse aufweisen und im Wesentlichen ellipsenförmig ausgebildet sind, wobei die erste Symmetrieachse die Längsachse schneidet. Die Hauptachse der Ellipse, welche der ersten Symmetrieachse entspricht, ist also radial ausgerichtet.

Die erste Öffnung muss jedoch nicht mathematisch genau eine Ellipse darstellen, sondern kann der elliptischen Form angenähert werden, indem der Umfang der ersten Öffnungen aus einer Kette tangential miteinander verbundener Kreisradien gebildet wird. Durch die verketteten Radien werden Spannungskonzentrationen weiter vermindert und der Kraftfluss durch die Speichen sanft umgelenkt.

Für die Auslegung der Abmessungen der ersten Öffnungen ist das Verhältnis von größter Breite der ersten Öffnungen zu größter Länge der ersten Öffnungen von entscheidender Bedeutung. Wenn dieses Verhältnis in einem Bereich zwischen 1:1,5 und 1:2,5, vorzugsweise 1:1,8 und 1:2,2, liegt, lassen sich hohe Steifigkeiten bei besonders niedrigem Materialaufwand und dementsprechend reduziertem Gewicht erreichen. Dabei wird die größte Länge in radialer Richtung bzw. in Richtung der ersten Symmetrieachse und die größte Breite in Umfangsrichtung bzw. normal zur ersten Symmetrieachse gemessen.

Bezüglich der zweiten Öffnungen, also jener in der Rückwand, hat es sich als günstig erwiesen, wenn die zweiten Öffnungen eine zweite Symmetrieachse aufweisen und im Wesentlichen wangenförmig ausgebildet sind, wobei die zweite Symmetrieachse die Längsachse schneidet. Somit sind auch die wangenförmigen zweiten Öffnungen, bzw. deren größter Durchmesser, radial ausgerichtet. Statt der Bezeichnung wangenförmig kann analog der Begriff eiförmig verwendet werden.

Durch die Wangenform der zweiten Öffnungen liegt deren größte Breite - in radialer Richtung gesehen - nicht in der Mitte zwischen radial innerstem und radial äußersten Punkt, sondern radial außerhalb. Dies bedeutet, dass die zweiten Öffnungen normal zur zweiten Symmetrieachse eine maximale Ausdehnung in einem Bereich aufweisen, welcher gegenüber einem Mittelpunkt der zweiten Öffnung radial in Richtung der Lauffläche versetzt ist.

Um die Spannungskonzentration entlang der Speichen weiter zu reduzieren, wird der Umfang der zweiten Öffnungen aus einer Kette tangential miteinander verbundenen Kreisradien gebildet.

Bezüglich der Gestaltung der wangenförmigen zweiten Öffnungen hat es sich als günstig erwiesen, dass das Verhältnis zwischen dem in Bezug zur Längsachse innersten Radius der zweiten Öffnungen und dem in Bezug zur Längsachse äußersten Radius der zweiten Öffnungen in einem Bereich zwischen 1:1,4 und 1:1,8, vorzugsweise zwischen 1:1,5 und 1:1,7, liegt. So wird der Spannungsgradient entlang der zweiten Speichen weiter reduziert.

Auch für die konstruktive Gestaltung der zweiten Öffnungen ist das Verhältnis von größter Breite der zweiten Öffnungen zu größter Länge der zweiten Öffnungen von entscheidender Bedeutung. Liegt dieses Verhältnis in einem Bereich zwischen 1:1,5 und 1:2,5, vorzugsweise 1:1,8 und 1:2,2, so lassen sich ebenfalls hohe Steifigkeiten bei besonders niedrigem Materialaufwand und dementsprechend reduziertem Gewicht erreichen. Dabei wird die größte Länge in radialer Richtung bzw. in Richtung der zweiten Symmetrieachse und die größte Breite in Umfangsrichtung bzw. normal zur zweiten Symmetrieachse gemessen.

In der Regel wird aus Gründen der gleichmäßigen Verteilung der Kräfte vorgesehen sein, dass die ersten und zweiten Öffnungen in Umfangsrichtung symmetrisch zur Längsachse verteilt angeordnet sind und sich ein Teilungswinkel zwischen zwei ersten Öffnungen einstellt. Durch den konstanten Teilungswinkel und die gleichmäßige Verteilung um die Längsachse wird eine homogene radiale Steifigkeit des Vollrades erreicht, sodass Unrundheiten auf der Lauffläche weitest gehend vermieden werden.

Auch wird in der Regel aus Gründen der gleichmäßigen Verteilung der Kräfte vorgesehen sein, dass die Anzahl der ersten Öffnungen und die Anzahl der zweiten Öffnungen gleich groß ist, wobei dann die ersten Öffnungen gegenüber den zweiten Öffnungen in Umfangsrichtung versetzt sein können, insbesondere - aus Symmetriegründen - um die Hälfte des Teilungswinkels.

Um Resonanzeffekte bei Schwingungsmodi des Vollrades zu verringern bzw. zu vermeiden, ist es grundsätzlich günstig, wenn sowohl die Anzahl der ersten Öffnungen als auch die Anzahl der zweiten Öffnungen jeweils einer Primzahl, vorzugsweise 11, 13 oder 17, entspricht.

Der Hohlraum des Vollrads wird am besten - im Sinne einer einfachen Fertigung und einer gleichmäßigen Verteilung der Kräfte - ein rotationssymmetrisches Volumen sein, welches durch die Rotation eines rotierten Querschnittes um die Längsachse gebildet ist.

Aus Gründen der Stabilität kann vorgesehen sein, dass sich der rotierte Querschnitt von der Nabe aus zur Lauffläche hin verjüngt.

Das der Lauffläche zugewandte Ende des rotierten Querschnitts wird ja durch die Innenflächen der Stirn- und Rückwand bzw. der von Stirn- und Rückwand übrig bleibenden Speichen gebildet und soll die Form eines Gewölbes haben. Insofern ist in einer Ausführungsvariante der Erfindung vorgesehen, dass das der Lauffläche zugewandte Ende des rotierten Querschnitts als eine Kette tangential miteinander verbundener Kreisradien ausgebildet ist.

Um die Tragfähigkeit des Radkranzes und der darauf angeordneten Lauffläche trotz Ausbildung des Hohlraumes gewährleisten zu können, ist in einer weiteren Ausführungsvariante der Erfindung vorgesehen, dass die Differenz zwischen einem Radradius des Rades im neuen Zustand und einem größten Radius des rotierten Querschnitts zwischen 60 mm und 70 mm, vorzugsweise zwischen 65 mm und 68 mm liegt. Unter dem Radradius wird dabei der nach an sich bekannter Weise bestimmte Nennradius des Vollrades verstanden, wobei der größte Radius des rotierten Querschnitts jenem Radius entspricht, welcher durch den in radialer Richtung am weitesten von der Längsachse entfernten Punkt des rotierten Querschnitt darstellt. In anderen Worten entspricht der größte Radius dem Abstand des Scheitels des Gewölbes von der Längsachse.

Es kann vorgesehen sein, dass die maximale Ausdehnung des rotierten Querschnitts in einer Richtung normal zur Längsachse (also radial) in einem Bereich von 50% bis 60%, vorzugsweise 51% bis 58%, des Radradius liegt. Mit anderen Worten hat der rotierte Querschnitt eine Länge (und damit der Hohlraum eine radiale Abmessung), die 50% bis 60%, vorzugsweise 51% bis 58%, des Radradius beträgt.

Durch eine Neigung der Außenfläche der Stirn- und/oder Rückwand mit zunehmendem Radius (was einer Neigung der Außenflächen der entsprechenden Speichen mit zunehmendem Radius gleichbedeutend ist), kann die radiale und axiale Steifigkeit des Vollrads weiter erhöht werden.

Insofern kann vorgesehen sein, dass die Außenfläche jenes kreisringförmigen Bereichs der Stirnwand, welcher die ersten Öffnungen aufweist, eben ausgebildet ist und einen ersten Neigungswinkel mit der Normalen der Längsachse einschließt.

Alternativ oder zusätzlich kann vorgesehen sein, dass die Außenfläche jenes kreisringförmigen Bereichs der Rückwand, welcher die zweiten Öffnungen aufweist, eben ausgebildet ist und einen zweiten Neigungswinkel mit der Normalen der Längsachse einschließt.

Um die Position der Lauffläche in Bezug zur Nabe einzustellen, ist einer besonders bevorzugten Ausführungsvariante der Erfindung vorgesehen, dass die Neigungswinkel (also sowohl der erste als auch der zweite Neigungswinkel) in einem Bereich zwischen 0° und 10°, vorzugsweise zwischen 1° und 6°, liegen.

Im Falle der Neigung sowohl der Außenfläche der Stirnwand als auch der Außenfläche der Rückwand hat es sich als vorteilhaft herausgestellt, wenn der erste Neigungswinkel (jener der Stirnwand) kleiner ist als der zweite Neigungswinkel (jener der Rückwand).

Wenn die Stirn- und Rückwand im Bereich des Hohlraums (bzw. deren Speichen) - in radialer Richtung gesehen - keine Änderung der Dicke (also des Abstands zwischen Innen- und Außenfläche) aufweisen, dann bedingt eine Neigung der Außenfläche der Stirn- und Rückwand (bzw. deren Speichen) auch eine Neigung der Innenfläche und damit eine entsprechende Verjüngung des rotierten Querschnitts (bzw. des Hohlraums) nach radial außen.

Um das Gewicht des Vollrads niedrig zu halten und die tribologischen Eigenschaften zu verbesern, kann vorgesehen sein, dass das Vollrad einteilig als Gussteil ausgeführt ist.

Die Herstellung eines Gussteils erfolgt im Wesentlichen in einem Guss-Schritt dem zumindest eine Wärmebehandlung nachgeschaltet ist, um das Gefüge des Gussteils vorteilhaft zu verändern. Darüber hinaus haben einteilige Vollräder den Vorteil, dass keine Verbindungsstellen zwischen Einzelteilen vorliegen, die verschleißen können. Das Vollrad könnte etwa durch Stahlguss hergestellt sein.

Manche Gusswerkstoffe haben zudem den Vorteil, ein geringeres spezifisches Gewicht zu haben als etwa Stahl. Hier sei z.B. der Werkstoff ADI genannt.

Die Abkürzung ADI ist auch im Deutschen gebräuchlich für sogenanntes ausferritisches Gusseisen mit Kugelgraphit und wird im Englischen als Austempered Ductile Iron (ADI) bezeichnet. ADI ist ein austenitisch-ferritisches Gusseisen mit Kugelgraphit, die mechanischen Eigenschaften von ADI sind beispielsweise in der Europäischen Norm EN 1564 beschrieben. ADI ist ein verzugsarm isothermisch vergütetes Gusseisen mit Kugelgraphit. Es zeichnet sich aus durch eine sehr günstige Kombination von Festigkeit und Dehnung sowie hohe Wechselfestigkeit und günstiges Verschleißverhalten. In Bezug auf das Vollrad ergibt sich durch die verbesserten tribologischen Eigenschaften, also den reduzierten Verschleiß der Lauffläche und des Spurkranzes, eine deutlich erhöhte Lebensdauer eines erfindungsgemäßen Vollrades. In Testversuchen wurde bereits eine Verdoppelung der Lebensdauer in Bezug zu nach dem Stand der Technik hergestellten Vollrädern festgestellt.

Als Basis für ADI dient Gusseisen mit Kugelgraphit. Um die isothermische Umwandlung ohne Perlitbildung oder Bainitbildung zu erreichen, werden die für ADI bestimmten Schmelzen in der Regel mit geringen Mengen von Kupfer, Molybdän, Mangan und Nickel legiert. Wegen der notwendigen Makro- und Mikrohomogenität werden hohe Qualitätsanforderungen an die ADI-Gussstücke gestellt.

Die Temperatur der isothermischen Umwandlung beeinflusst das entstehende Gefüge und dadurch die mechanischen Eigenschaften der Gussstücke. Je niedriger die Temperatur, desto höher ist die resultierende Härte und Festigkeit des Materials (bzw. desto geringer der Restaustenitanteil).

Da das erfindungsgemäße Vollrad ein Gussteil sein kann, umfasst die Erfindung auch ein Verfahren zur Herstellung eines Vollrads, indem das Vollrad einteilig als Gussteil gefertigt wird.

Die gewölbeartige Ausführung der Stirn- und Rückwand unterhalb des Radkranzes und die zueinander versetzen ersten und zweiten Öffnungen in Stirn- bzw. Rückwand verleihen dem Radkranz eine hohe radiale und axiale Steifigkeit, wodurch sich eine geringe Schallemission des Vollrades ergibt.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine Seitenansicht der Stirnfläche (Stirnwand) eines erfindungsgemäßen Vollrades
- Fig. 2: eine Seitenansicht der Rückenfläche (Rückwand) eines erfindungsgemäßen Vollrades
- Fig. 3: eine Schnittdarstellung eines erfindungsgemäßen Vollrades gemäß der Linie AA aus Fig. 1
- Fig. 4: eine Schnittdarstellung eines erfindungsgemäßen Vollrades gemäß der Linie BB aus Fig. 1
- Fig. 5: eine Detaildarstellung von zweiten Öffnungen auf der Rückwand
- Fig. 6: eine Detaildarstellung von ersten Öffnungen auf der Stirnwand

### Ausführung der Erfindung

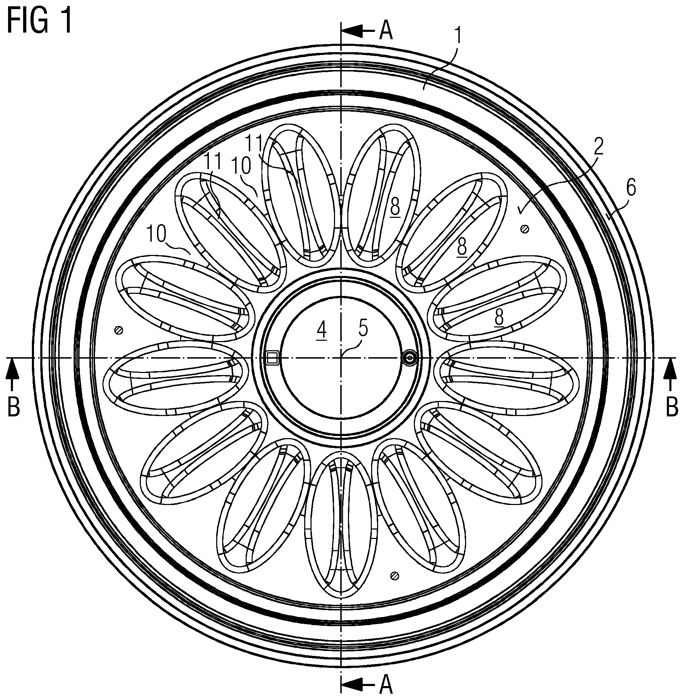

Fig. 1 zeigt eine Seitenansicht einer Stirnwand 2 einer Ausführungsvariante eines erfindungsgemäßen Vollrades für ein Schienenfahrzeug. Das Vollrad umfasst einen am Umfang des Vollrades angeordneten Radkranz 1 und eine im Zentrum des Vollrades angeordnete Nabe 4 zur Anbindung einer Radsatzwelle. Die Nabe 4 weist dabei eine Längsachse 5 auf, welche der Drehachse des Vollrades entspricht. Radkranz 1 und Nabe 4 sind auf einer Seite durch die Stirnwand 2 und auf der anderen Seite durch eine, in dieser Ansicht nicht sichtbare, Rückwand 3 verbunden. Im eingebauten Zustand entspricht die Rückwand 3 die dem Schienenfahrzeug zugewandte Seite des Vollrades und die Stirnwand 2 die dem Schienenfahrzeug abgewandte Seite des Vollrades. In radialer Richtung wird der Radkranz 1 durch die Lauffläche 6 begrenzt, welche im Betriebszustand auf einer Schiene abrollt.

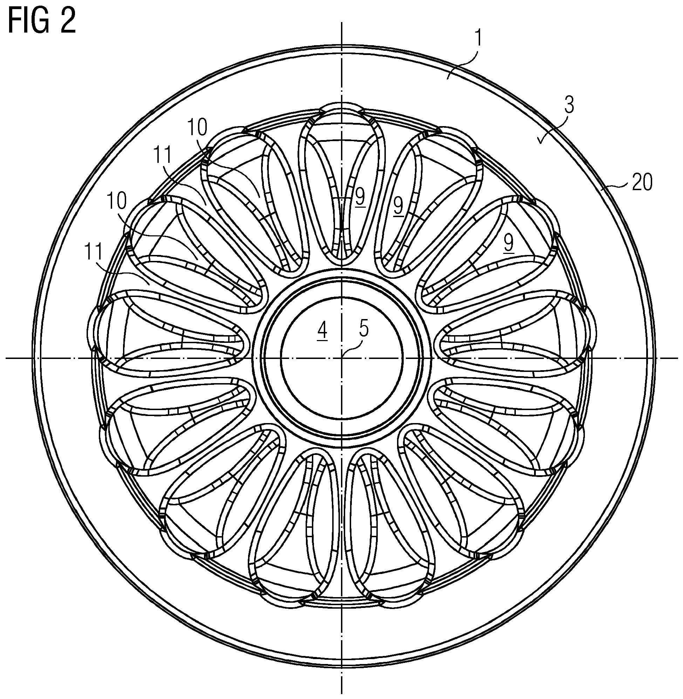

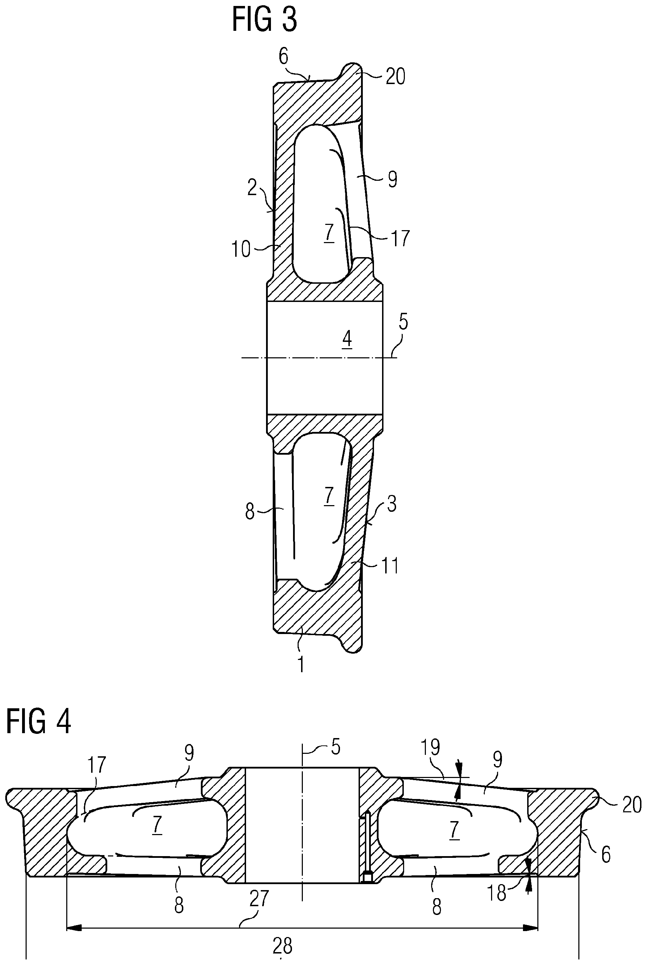

Zwischen dem Radkranz 1 und der Nabe 4 bildet sich ein Hohlraum 7 aus, wie in den Figuren 3 und 4 dargestellt, welcher auf der einen Seite durch die Stirnwand 2, insbesondere von deren ersten Speichen 10, und auf der anderen Seite durch die Rückwand 3, insbesondere durch deren zweite Speichen 11, begrenzt wird, wie in Fig. 2 zu sehen ist. Die ersten Speichen 10 entstehen dabei durch zwei in der Stirnwand 2 nebeneinander angeordnete erste Öffnungen 8, welche die Stirnwand 2 durchbrechen und so den Hohlraum 7 nach außen hin öffnen.

Die ersten Öffnungen 8 sind im Wesentlichen ellipsenförmig ausgebildet, wobei die Hauptachse der Öffnungen 8 jeweils radial angeordnet ist. Zwischen den ersten Öffnungen 8 bilden sich erste Speichen 10, die ihre kleinste Breite - in radialer Richtung gesehen - etwas innerhalb vom Mittelpunkt der Öffnungen 8 haben.

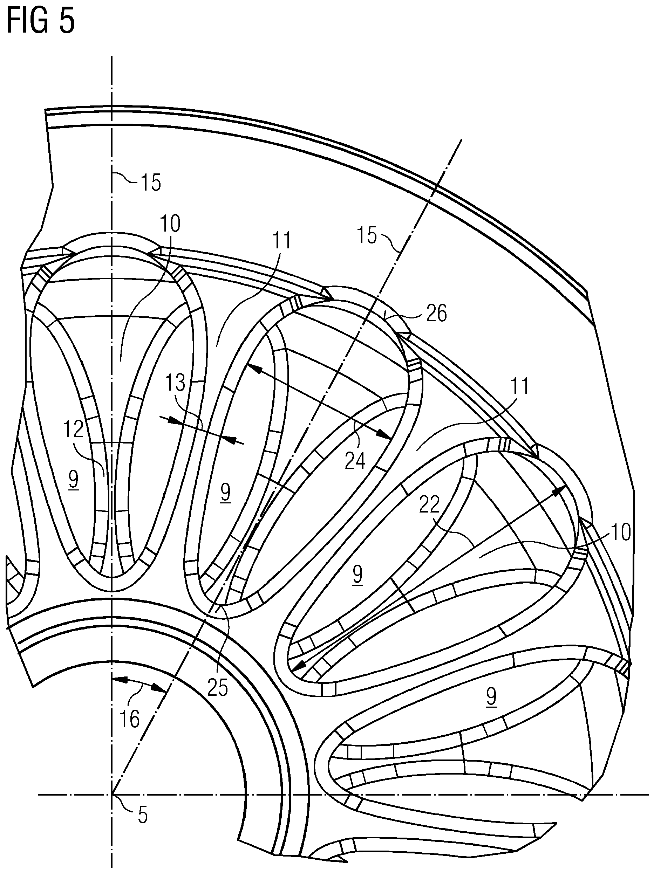

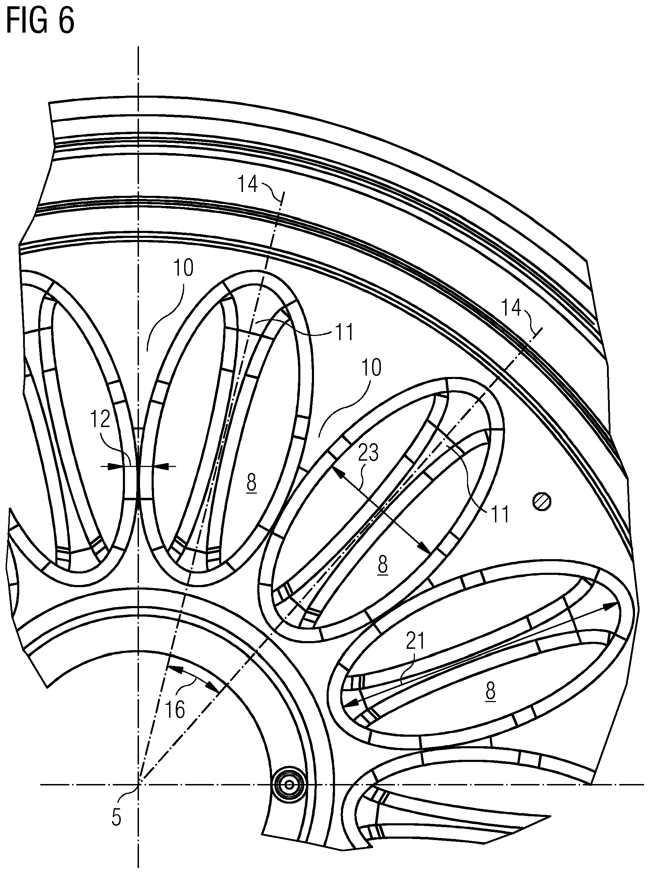

Es sind dreizehn erste Öffnungen 8 gleichmäßig um den Umfang des Vollrades verteilt. Durch den Hohlraum 7 hindurch sieht man die zweiten Öffnungen 9, die sich in der Rückwand 3 befinden, wobei sich zwischen zwei zweiten Öffnungen 9 jeweils eine zweite Speiche 11 befindet. Die ersten Öffnungen 8 sind dabei in Umfangsrichtung so gegenüber den zweiten Öffnungen 9 versetzt, dass die zweite Speiche 11 - bei Betrachtung parallel zur Längsachse 5 - jeweils mittig in der ersten Öffnung 8 angeordnet ist. Entsprechend ergibt dies für die Anordnung der ersten Speichen 10, dass diese jeweils mittig in der zweiten Öffnung 9 angeordnet sind, siehe hierzu auch Fig. 5 und 6.

In Fig. 2 ist eine Seitenansicht eines erfindungsgemäßen Vollrades mit Blick auf die Rückwand 3 abgebildet, wobei die zweiten Öffnungen 9 im Detail zu sehen sind. Analog zu den ersten Öffnungen 8 und den ersten Speichen 10, sind auf der Rückwand 3 dreizehn zweite Öffnungen 9 und gleich viele zweite Speichen 11, welche wiederum durch jeweils zwei zweite Öffnungen 9 in der Rückwand 3 gebildet werden, angeordnet. Diese zweiten Öffnungen 9 öffnen wiederum den Hohlraum 7, auf die andere Seite, nach außen hin. Die zweiten Öffnungen 9 sind dabei wangenförmig ausgebildet, wobei auch die Bezeichnung eiförmig zutreffend wäre. Wangenförmig bedeutet, dass diese zweiten Öffnungen 9 länglich sind, wobei der Umfang ein Längsende mit einer kleineren Krümmung und ein Längsende mit einer größeren Krümmung aufweist und die Krümmungen der beiden Längsenden wenig gekrümmte (zumindest weniger als die größere Krümmung des einen Längsendes) Linien miteinander verbunden sind. Zusätzlich dazu ist auch gut zu erkennen, dass die Lauffläche 6 am Übergang zur Rückwand 3 einen Spurkranz 20 als Sicherheitshilfsmittel aufweist, der die Spurführung sicherstellt und die Lauffläche 6 daher in dieser Darstellung verdeckt.

Figur 3 zeigt eine Schnittansicht einer Ausführungsvariante eines erfindungsgemäßen Vollrades. Diese Darstellung zeigt deutlich den eingangs beschriebenen Aufbau des Vollrades: von der im Zentrum angeordneten Nabe 4 aus ist der am Umfang angeordnete Radkranz 1 auf der einen Seite durch die Stirnwand 2 und auf der anderen Seite durch die Rückwand 3 verbunden. Zwischen Stirnwand 2, Rückwand 3, Nabe 4 und Radkranz 1 ist der Hohlraum 7 ausgebildet, der dem Aufbau eines Gewölbes ähnelt. Auf der Stirnseite 2 ist der Hohlraum 7 über die ersten Öffnungen 8, von der eine zu sehen ist, nach außen hin speichenartig geöffnet, wobei die durch die ersten Öffnungen 8 gebildeten ersten Speichen 10, ebenfalls ist eine im Schnitt zu sehen, die Verbindung zwischen Nabe 4 und Radkranz 1 herstellen. Auf der Rückwand 3 sind in derselben Art und Weise die zweiten Öffnungen 9 und die zweiten Speichen 11 angeordnet, wobei wieder deutlich zu erkennen ist, dass erste 10 und zweite Speichen 11 so versetzt sind, dass eine Öffnung 8,9 auf der einen Wand 2,3 mittig zu einer Speiche 11,10 auf der anderen Wand 3,2 ausgerichtet ist. Der Hohlraum 7 ist ein um die Längsachse 5 rotationssymmetrisches Volumen, welches durch die Rotation eines rotierten Querschnittes 17 um die Längsachse 5 gebildet wird. Der Hohlraum 7 hat in radialer Richtung eine größere Abmessung als in axialer Richtung. Das der Lauffläche 6 zugewandte Ende des rotierten Querschnitts 17 ist als eine Kette tangential miteinander verbundener Kreisradien ausgebildet. Der rotierte Querschnitt 17 verjüngt sich dabei von der Nabe 4 aus in Richtung der Lauffläche 6. Die Lauffläche 6 weist eine Laufflächenneigung auf.

In Fig. 4 sind die Neigungswinkel der Stirnwand 2 und der Rückwand 3 eingezeichnet. Die Außenfläche der Stirnwand 2 (bzw. die Außenfläche der ersten Speichen 10) weist im Bereich der ersten Öffnungen 8 einen ersten Neigungswinkel 18 von ca. 1-2° auf und ist zur Lauffläche 6 hin nach innen geneigt. Die Außenfläche der Stirnwand 3 (bzw. die Außenfläche der zweiten Speichen 11) weist im Bereich der zweiten Öffnungen 9 einen zweiten Neigungswinkel 19 von ca. 5-7° auf und ist ebenfalls zur Lauffläche 6 hin nach innen geneigt. Der zweite Neigungswinkel 19 ist dabei größer als der erste Neigungswinkel 18. Es sind jedoch auch andere Varianten denkbar, bei denen die Neigungswinkel 18,19 gleich groß sind, oder aber der erste Neigungswinkel 18 größer als der zweite Neigungswinkel 19 ist.

Das der Lauffläche 6 zugewandte Ende des rotierten Querschnitts 17, das gewölbeartig ausgebildet ist und somit eine Krümmung aufweist, hat in der Stirnwand 2 eine stärkere Krümmung als in der Rückwand 3, wo es insgesamt flacher verläuft

Die Position des rotierten Querschnitts 17 in radialer Richtung ist im Wesentlichen durch die Differenz eines Radradius 28, welcher für den Fachmann leicht zu ermitteln ist, und einem größten Radius 27 des rotierten Querschnittes bestimmt. Der größte Radius 27 bezieht sich dabei auf den Abstand zwischen der Längsachse 5 und dem in radialer Richtung am weitesten von der Längsachse 5 entfernten Punkt des rotierten Querschnitts 17, also in anderen Worten dem höchsten Punkt des gewölbeartig ausgebildeten, der Lauffläche 6 zugewandten, Endes des rotierten Querschnitts 17. Im vorliegenden Ausführungsbeispiel beträgt diese Differenz 65 mm.

Das der Radnabe 4 zugewandte Ende des rotierten Querschnitts 17 ist ebenfalls abgerundet und hat in der Stirnwand 2 insgesamt eine kleinere Krümmung als in der Rückwand 3. Zwischen Stirnwand 2 und Rückwand 3 liegt ein gerader Abschnitt vor, der parallel zur Längsachse 5 ist.

Im Bereich außerhalb der Radnabe 4 sind sowohl an der Außenseite der Stirnwand 2 als auch an der Außenseite der Rückwand 3 Mulden zur Spannungsentlastung vorgesehen. Stirn- und Rückwand 2, 3 sind dadurch außerhalb der Radnabe 4 nach innen versetzt. Die Mulden bzw. die Versetzungen beginnen hier beim gleichen Radius wie der Hohlraum 7.

Die maximale Ausdehnung des rotierten Querschnitts 17 in radialer Richtung, also der Abstand zwischen dem radial am weitesten innen liegenden Punkt des rotierten Querschnitts 17, im vorliegenden Fall liegt dieser Punkt auf dem zur Längsachse 5 parallelen Abschnitt des rotierten Querschnitts 17, und dem größten Radius 27 des rotierten Querschnitts 17, ist vom Radradius 28 abhängig. Im vorliegenden Ausführungsbeispiel beträgt die maximale Ausdehnung etwa 57% des Radradius 28.

In Fig. 5 sind die wangenförmigen zweiten Öffnungen 9 im Detail zu sehen, die jeweils zu einer Symmetrieachse 15 symmetrisch sind. Die Symmetrieachsen 15 schneiden dabei die Längsachse 5 in einem Punkt und sind gegeneinander um einen Teilungswinkel 16 versetzt. So ergibt sich zwischen den zweiten Öffnungen 9, von denen insgesamt dreizehn Stück vorhanden sind, der Teilungswinkel 16 von 360°/13, somit ca. 27,7°.

Die zweiten Öffnungen 9 sind mit ihrer Längsrichtung radial angeordnet, wobei das Längsende mit der kleineren Krümmung, welches einen innersten Radius 25 ausbildet, innen zu liegen kommt. Auf der entgegengesetzten Seite, also dem radial außen liegende Längsende, weisen die zweiten Öffnungen 9 eine größere Krümmung auf, welche einen äußersten Radius 26 ausbildet. Das Verhältnis zwischen innerstem Radius 25 und äußerstem Radius 26 liegt dabei im vorliegenden Ausführungsbeispiel bei ungefähr 1:1,6.

Die Gestaltung der zweiten Öffnungen 9 wird im Wesentlichen durch deren größte Länge 22 und die größte Breite 24 bzw. deren Verhältnis zueinander bestimmt, wobei der Umfang der zweiten Öffnungen 9 durch eine Kette tangential miteinander verbundenen Kreisradien besteht. Die größte Länge 22 wird dabei in radialer Richtung bzw. in Richtung der Symmetrieachse 15 gemessen, während die größte Breite 24 in Umfangsrichtung bzw. normal zur Symmetrieachse 15 gemessen wird. Das Verhältnis der größten Breite 24 zur größten Länge 22 liegt dabei im vorliegenden Ausführungsbeispiel bei ca. 1:1,92. Der Abschnitt mit der größten Breite 24 ist dabei gegenüber dem Mittelpunkt der zweiten Öffnungen 9 radial nach außen versetzt und befindet sich im äußeren Drittel.

Die sich zwischen den Öffnungen 9 ausbildenden zweiten Speichen 11 haben ihre kleinste Breite 13 radial gesehen etwas innerhalb vom Mittelpunkt der Öffnungen 9.

In Fig. 6 sind die ersten Öffnungen 8 nochmals im Detail dargestellt. Jede erste Öffnung 8 weist eine erste Symmetrieachse 14 auf, die radial verläuft. Zwischen den dreizehn ersten Öffnungen 8 ergibt sich ein Teilungswinkel 16 von 360°/13, somit ca. 27,7°. Zwischen den ersten Symmetrieachsen 14 und den zweiten Symmetrieachsen 15 ergibt sich durch die Versetzung der Öffnungen 8,9 gegeneinander ein Winkel der der Hälfte des Teilungswinkels 16, also ca. 13,85°, entspricht.

Auch die Form der ersten Öffnungen 8 ist durch deren größte Länge 21 und größte Breite 23 bzw. deren Verhältnis zueinander bestimmt. Ebenso ist der Umfang der ersten Öffnungen 8 aus einer Kette von tangential miteinander verbundenen Kreisradien gebildet. Analog zu den zweiten Öffnungen 9 werden auch die Abmessungen der ersten Öffnungen 8 in radialer Richtung bzw. in Umfangsrichtung gemessen. Das Verhältnis zwischen der größten Breite 23 und größter Länge 21 liegt dabei im vorliegenden Ausführungsbeispiel bei etwa 1:2,1. Der Abschnitt mit der größten Breite 23 ist dabei ungefähr in der Mitte der ersten Öffnungen 8 angeordnet.

Die sich zwischen den ersten Öffnungen 8 ausbildenden ersten Speichen 10 haben ihre kleinste Breite 12 radial gesehen innerhalb des Mittelpunkts der Öffnungen 8, etwa an der Grenze zwischen innerem und mittlerem Drittel.

Das in den Fig. 1 bis 6 gezeigte Vollrad ist maßstäblich wiedergegeben und hat hier einen Raddurchmesser von 850 mm.

### Bezugszeichenliste:

- 1: Radkranz
- 2: Stirnwand
- 3: Rückwand
- 4: Nabe
- 5: Längsachse
- 6: Lauffläche
- 7: Hohlraum
- 8: erste Öffnungen
- 9: zweite Öffnungen
- 10: erste Speichen
- 11: zweite Speichen
- 12: kleinste Breite der ersten Speichen 10
- 13: kleinste Breite der zweiten Speichen 11
- 14: erste Symmetrieachse der ersten Öffnungen 8
- 15: zweite Symmetrieachse der zweiten Öffnungen 9
- 16: Teilungswinkel
- 17: rotierter Querschnitt
- 18: erster Neigungswinkel
- 19: zweiter Neigungswinkel
- 20: Spurkranz
- 21: größte Länge der ersten Öffnungen 8
- 22: größte Länge der zweiten Öffnungen 9
- 23: größte Breite der ersten Öffnungen 8
- 24: größte Breite der zweiten Öffnungen 9
- 25: innerster Radius der zweiten Öffnungen 9
- 26: äußerster Radius der zweiten Öffnungen 9
- 27: größter Radius des rotierten Querschnitts 17
- 28: Radradius

## Patentansprüche

1. Vollrad für ein Schienenfahrzeug, umfassend einen am Umfang des Vollrades angeordneten Radkranz (1) mit einer Lauffläche (6), welcher Radkranz (1) über eine Stirnwand (2) und eine Rückwand (3) mit einer, im Zentrum des Vollrades angeordneten, eine Längsachse (5) aufweisenden Nabe (4) für eine Radsatzwelle verbunden ist, **dadurch gekennzeichnet, dass** das Vollrad einen von der Stirnwand (2) und der Rückwand (3) begrenzten Hohlraum (7) ausbildet, wobei Stirnwand (2) und Rückwand (3) unter dem Radkranz (1) gewölbeartig ineinander übergehen und wobei die Stirnwand (2) erste Öffnungen (8) und die Rückwand (3) zweite Öffnungen (9) aufweist, um den Hohlraum (7) speichenartig nach außen zu öffnen.

2. Vollrad nach Anspruch 1, **dadurch gekennzeichnet, dass** sich jeweils zwischen zwei ersten Öffnungen (8) auf der Stirnwand (2) eine erste Speiche (10) und jeweils zwischen zwei zweiten Öffnungen (9) auf der Rückwand (3) eine zweite Speiche (11) ausbildet, wobei die Speichen (10, 11) ihre kleinste Breite (12, 13) jeweils im mittleren Drittel der Speiche aufweisen.

3. Vollrad nach Anspruch 2, **dadurch gekennzeichnet, dass** sich die Speichen (10, 11) von ihrer kleinsten Breite (12, 13) in radialer Richtung sowohl nach innen als auch nach außen verbreitern.

4. Vollrad nach einem der Ansprüche 1 bis 3, **dadurch gekennzeichnet, dass** die ersten Öffnungen (8) eine erste Symmetrieachse (14) aufweisen und im Wesentlichen ellipsenförmig ausgebildet sind, wobei die erste Symmetrieachse (14) die Längsachse (5) schneidet.

5. Vollrad nach Anspruch 4, **dadurch gekennzeichnet, dass** der Umfang der ersten Öffnung (8) aus einer Kette tangential miteinander verbundener Kreisradien gebildet wird.

6. Vollrad nach Anspruch 4 oder 5, **dadurch gekennzeichnet, dass** das Verhältnis von größter Breite (23) der ersten Öffnungen (8) zu größter Länge (21) der ersten Öffnungen (8) in einem Bereich zwischen 1:1,5 und 1:2,5, vorzugsweise 1:1,8 und 1:2,2, liegt.

7. Vollrad nach einem der Ansprüche 1 bis 6, **dadurch gekennzeichnet, dass** die zweiten Öffnungen (9) eine zweite Symmetrieachse (15) aufweisen und im Wesentlichen wangenförmig ausgebildet sind, wobei die zweite Symmetrieachse (15) die Längsachse (5) schneidet.

8. Vollrad nach Anspruch 7, **dadurch gekennzeichnet, dass** die zweiten Öffnungen (9) normal zur zweiten Symmetrieachse (15) eine größte Breite (24) in einem Bereich aufweisen, welcher gegenüber einem Mittelpunkt der zweiten Öffnung (9) radial in Richtung der Lauffläche (6) versetzt ist.

9. Vollrad nach Anspruch 7 oder 8, **dadurch gekennzeichnet, dass** der Umfang der zweiten Öffnung (9) aus einer Kette tangential miteinander verbundener Kreisradien gebildet wird.

10. Vollrad nach Anspruch 9, **dadurch gekennzeichnet, dass** das Verhältnis zwischen dem in Bezug zur Längsachse (5) innersten Radius (25) der zweiten Öffnungen (9) und dem in Bezug zur Längsachse (5) äußersten Radius (26) der zweiten Öffnungen (9) in einem Bereich zwischen 1:1,4 und 1:1,8, vorzugsweise zwischen 1:1,5 und 1:1,7, liegt.

11. Vollrad nach einem der Ansprüche 7 bis 10, **dadurch gekennzeichnet, dass** das Verhältnis von größter Breite (24) der zweiten Öffnungen (9) zu größter Länge (22) der zweiten Öffnungen (9) in einem Bereich zwischen 1:1,5 und 1:2,5, vorzugsweise 1:1,8 und 1:2,2, liegt.

12. Vollrad nach einem der Ansprüche 1 bis 11, **dadurch gekennzeichnet, dass** die ersten (8) und zweiten Öffnungen (9) in Umfangsrichtung symmetrisch zur Längsachse (5) verteilt angeordnet sind und sich ein Teilungswinkel (16) zwischen zwei ersten Öffnungen (8) einstellt.

13. Vollrad nach Anspruch 12, **dadurch gekennzeichnet, dass** die Anzahl der ersten Öffnungen (8) und die Anzahl der zweiten Öffnungen (9) gleich groß ist.

14. Vollrad nach Anspruch 12 oder 13, **dadurch gekennzeichnet, dass** die Anzahl der ersten und zweiten Öffnungen (8,9) jeweils einer Primzahl, vorzugsweise 11, 13 oder 17, entspricht.

15. Vollrad nach Anspruch 13 oder 14, **dadurch gekennzeichnet, dass** die ersten Öffnungen (8) gegenüber den zweiten Öffnungen (9) in Umfangsrichtung versetzt sind.

16. Vollrad nach Anspruch 15, **dadurch gekennzeichnet, dass** die erste Öffnungen (8) gegenüber den zweiten Öffnungen (9) um die Hälfte des Teilungswinkels (16) versetzt sind.

17. Vollrad nach einem der Ansprüche 1 bis 16, **dadurch gekennzeichnet, dass** der Hohlraum (7) ein rotationssymmetrischer Volumen ist, welches durch die Rotation eines rotierten Querschnittes (17) um die Längsachse (5) gebildet ist.

18. Vollrad nach Anspruch 17, **dadurch gekennzeichnet, dass** sich der rotierte Querschnitt (17) von der Nabe (4) aus zur Lauffläche (6) hin verjüngt.

19. Vollrad nach Anspruch 17 oder 18, **dadurch gekennzeichnet, dass** das der Lauffläche (6) zugewandte Ende des rotierten Querschnitts (17) als eine Kette tangential miteinander verbundener Kreisradien ausgebildet ist

20. Vollrad nach einem der Ansprüche 17 bis 18, **dadurch gekennzeichnet, dass** die Differenz zwischen einem Radradius (28) und einem größten Radius (27) des rotierten Querschnitts (17) zwischen 60 mm und 70 mm, vorzugsweise zwischen 65 mm und 68 mm liegt.

21. Vollrad nach einem der Ansprüche 17 bis 20, **dadurch gekennzeichnet, dass** die maximale Ausdehnung des rotierten Querschnitts (17) in einer Richtung normal zur Längsachse (5) in einem Bereich von 50% bis 60%, vorzugsweise 51% bis 58% des Radradius (28) liegt.

22. Vollrad nach einem der Ansprüche 1 bis 21, **dadurch gekennzeichnet, dass** die Außenfläche jenes kreisringförmigen Bereichs der Stirnwand (2), welcher die ersten Öffnungen (8) aufweist, eben ausgebildet ist und einen ersten Neigungswinkel (18) mit der Normalen der Längsachse (5) einschließt.

23. Vollrad nach einem der Ansprüche 1 bis 22, **dadurch gekennzeichnet, dass** die Außenfläche jenes kreisringförmigen Bereichs der Rückwand (3), welcher die zweiten Öffnungen (9) aufweist, eben ausgebildet ist und einen zweiten Neigungswinkel (19) mit der Normalen der Längsachse (5) einschließt.

24. Vollrad nach Anspruch 22 und 23, **dadurch gekennzeichnet, dass** die Neigungswinkel (18,19) in einem Bereich zwischen 0° und 10°, vorzugsweise zwischen 1° und 6°, liegen.

25. Vollrad nach einem der Ansprüche 1 bis 24, **dadurch gekennzeichnet, dass** das Vollrad einteilig als Gussteil ausgeführt ist.

26. Vollrad nach Anspruch 25, **dadurch gekennzeichnet, dass** es aus ausferritischem Gusseisen mit Kugelgraphit gefertigt ist.

27. Verfahren zur Herstellung eines Vollrads nach einem der Ansprüche 1 bis 26, **dadurch gekennzeichnet, dass** das Vollrad einteilig als Gussteil gefertigt wird.

## Claims

1. Solid wheel for a rail vehicle, comprising a wheel rim (1) which is arranged on the circumference of the solid wheel, which comprises a tread (6), which wheel rim (1) is connected to a hub (4) for a wheel set shaft via an end wall (2) and a rear wall (3), said hub being arranged in the centre of the solid wheel and having a longitudinal axis (5), **characterised in that** the solid wheel forms a cavity (7) which is delimited by the end wall (2) and the rear wall (3), wherein the end wall (2) and the rear wall (3) transition into each other below the wheel rim (1) in an arched manner and wherein the end wall (2) has first openings (8) and the rear wall (3) has second openings (9) in order to open the cavity (7) outward in a spoked manner.

2. Solid wheel according to claim 1, **characterised in that** in each case a first spoke (10) is formed between two first openings (8) on the end wall (2) and in each case a second spoke (11) is formed between two second openings (9) on the rear wall (3), wherein the spokes (10, 11) have their smallest width (12, 13) in each case in the central third of the spoke.

3. Solid wheel according to claim 2, **characterised in that** the spokes (10, 11) widen both inwardly and outwardly from their smallest width (12, 13) in the radial direction.

4. Solid wheel according to one of claims 1 to 3, **characterised in that** the first openings (8) have a first axis of symmetry and are configured to be substantially elliptical, wherein the first axis of symmetry (14) intersects the longitudinal axis (5).

5. Solid wheel according to claim 4, **characterised in that** the circumference of the first openings (8) is formed from a series of circle radii connected together tangentially.

6. Solid wheel according to claim 4 or 5, **characterised in that** the ratio of the greatest width (23) of the first openings (8) to the greatest length (21) of the first openings (8) ranges between 1:1.5 and 1:2.5, preferably 1:1.8 and 1:2.2.

7. Solid wheel according to one of claims 1 to 6, **characterised in that** the second openings (9) have a second axis of symmetry (15) and are configured to be substantially cheek-shaped, wherein the second axis of symmetry (15) intersects the longitudinal axis (5).

8. Solid wheel according to claim 7, **characterised in that** the second openings (9) perpendicular to the second axis of symmetry (15) have a greatest width (24) in a region which is offset radially in the direction of the tread (6) relative to a central point of the second opening (9) .

9. Solid wheel according to claim 7 or 8, **characterised in that** the circumference of the second openings (9) is formed from a series of circle radii connected together tangentially.

10. Solid wheel according to claim 9, **characterised in that** the ratio between the innermost radius (25) of the second openings (9) relative to the longitudinal axis (5) and the outermost radius (26) of the second openings (9) relative to the longitudinal axis (5) ranges between 1:1.4 and 1:1.8, preferably between 1:1.5 and 1:1.7.

11. Solid wheel according to one of claims 7 to 10, **characterised in that** the ratio of the greatest width (24) of the second openings (9) to the greatest length (22) of the second openings (9) ranges between 1:1.5 and 1:2.5, preferably 1:1.8 and 1:2.2.

12. Solid wheel according to one of claims 1 to 11, **characterised in that** the first (8) and second openings (9) in the circumferential direction are arranged so as to be distributed symmetrically to the longitudinal axis (5) and a pitch angle (16) is present between two first openings (8).

13. Solid wheel according to claim 12, **characterised in that** the number of first openings (8) and the number of second openings (9) is the same.

14. Solid wheel according to claim 12 or 13, **characterised in that** the number of first and second openings (8, 9) in each case corresponds to a prime number, preferably 11, 13 or 17.

15. Solid wheel according to claim 13 or 14, **characterised in that** the first openings (8) are offset relative to the second openings (9) in the circumferential direction.

16. Solid wheel according to claim 15, **characterised in that** the first openings (8) are offset relative to the second openings (9) by half of the pitch angle (16).

17. Solid wheel according to one of claims 1 to 16, **characterised in that** the cavity (7) is a rotationally symmetrical volume which is formed by the rotation of a rotated cross section (17) about the longitudinal axis (5) .

18. Solid wheel according to claim 17, **characterised in that** the rotated cross section (17) tapers from the hub (4) toward the tread (6).

19. Solid wheel according to claim 17 or 18, **characterised in that** the end of the rotated cross section (17) facing the tread (6) is configured as a series of circle radii connected together tangentially.

20. Solid wheel according to one of claims 17 to 18, **characterised in that** the difference between a wheel radius (28) and a greatest radius (27) of the rotated cross section (17) is between 60 mm and 70 mm, preferably between 65 mm and 68 mm.

21. Solid wheel according to one of claims 17 to 20, **characterised in that** the maximum extent of the rotated cross section (17) in a direction perpendicular to the longitudinal axis (5) ranges from 50% to 60%, preferably 51% to 58%, of the wheel radius (28).

22. Solid wheel according to one of claims 1 to 21, **characterised in that** the outer surface of that circular region of the end wall (2) which has the first openings (8) is configured to be planar and encloses a first angle of inclination (18) with the normal of the longitudinal axis (5).

23. Solid wheel according to one of claims 1 to 22, **characterised in that** the outer surface of that circular region of the rear wall (3) which has the second openings (9) is configured to be planar and encloses a second angle of inclination (19) with the normal of the longitudinal axis (5).

24. Solid wheel according to claim 22 and 23, **characterised in that** the angle of inclination (18, 19) ranges between 0° and 10°, preferably between 1° and 6°.

25. Solid wheel according to one of claims 1 to 24, **characterised in that** the solid wheel is designed in one piece as a cast part.

26. Solid wheel according to claim 25, **characterised in that** it is produced from ausferritic cast iron with spheroidal graphite.

27. Method for producing a solid wheel according to one of claims 1 to 26, **characterised in that** the solid wheel is produced in one piece as a cast part.

## Revendications

1. Roue pleine pour un véhicule ferroviaire comprenant une jante (1) disposée à la périphérie de la roue pleine comprenant une bande de roulement (6), ladite jante (1) étant reliée via une paroi avant (2) et une paroi arrière (3) à un moyeu (4) pour un arbre d'essieu, présentant un axe longitudinal (5), disposé au centre de la roue pleine, **caractérisée en ce que** la roue pleine forme un espace creux (7) délimité par la paroi avant (2) et la paroi arrière (3) ; dans laquelle la paroi avant (2) et la paroi arrière (3) se fondent l'une dans l'autre en formant une voûte en dessous de la jante (1) ; et dans laquelle la paroi avant (2) présente des premières ouvertures (8) et la paroi arrière (3) présente des deuxièmes ouvertures (9) pour ouvrir l'espace creux (7) vers l'extérieur en formant des rayons.

2. Roue pleine selon la revendication 1, **caractérisée en ce que**, respectivement entre deux premières ouvertures (8) sur la paroi avant (2), on forme un premier rayon (10), et respectivement entre deux deuxièmes ouvertures (9) sur la paroi arrière (3), on forme un deuxième rayon (11) ; dans laquelle les rayons (10, 11) présentent leur plus petite largeur (12, 13), respectivement dans le tiers médian des rayons.

3. Roue pleine selon la revendication 2, **caractérisée en ce que** les rayons (10, 11) s'élargissent en direction radiale aussi bien vers l'intérieur que vers l'extérieur, à partir de leur plus petite largeur (12, 13).

4. Roue pleine selon l'une quelconque des revendications 1 à 3, **caractérisée en ce que** les premières ouvertures (8) présentent un premier axe de symétrie (14) et sont réalisées essentiellement en forme d'ellipse ; dans laquelle le premier axe de symétrie (14) coupe l'axe longitudinal (5).

5. Roue pleine selon la revendication 4, **caractérisée en ce que** la périphérie de la première ouverture (8) est formée par une chaîne de rayons circulaires reliés les uns aux autres en direction tangentielle.

6. Roue pleine selon la revendication 4 ou 5, **caractérisée en ce que** le rapport de la largeur maximale (23) des premières ouvertures (8) à la longueur maximale (21) des premières ouvertures (8) se situe dans une plage entre 1:1,5 et 1:2,5, de préférence entre 1:1,8 et 1:2,2.

7. Roue pleine selon l'une quelconque des revendications 1 à 6, **caractérisée en ce que** les deuxièmes ouvertures (9) présentent un deuxième axe de symétrie (15) et sont réalisées essentiellement en forme de joues ; dans laquelle le deuxième axe de symétrie (15) coupe l'axe longitudinal (5).

8. Roue pleine selon la revendication 7, **caractérisée en ce que** les deuxièmes ouvertures (9) présentent, perpendiculairement au deuxième axe de symétrie (15), une largeur maximale (24) dans une zone qui est décalée, par rapport à un point médian de la deuxième ouverture (9), en direction radiale dans la direction de la bande de roulement (6).

9. Roue pleine selon la revendication 7 ou 8, **caractérisée en ce que** la périphérie de la deuxième ouverture (9) est formée par une chaîne de rayons circulaires reliés les uns aux autres en direction tangentielle.

10. Roue pleine selon la revendication 9, **caractérisée en ce que** le rapport entre le rayon le plus interne (25) des deuxièmes ouvertures (9) par rapport à l'axe longitudinal (5) et le rayon le plus externe (26) des deuxièmes ouvertures (9) par rapport à l'axe longitudinal (5) se situe dans une plage entre 1:1,4 et 1:1,8, de préférence entre 1:1,5 et 1:1,7.

11. Roue pleine selon l'une quelconque des revendications 7 à 10, **caractérisée en ce que** le rapport de la largeur maximale (24) des deuxièmes ouvertures (9) à la longueur maximale (22) des deuxièmes ouvertures (9) se situe dans une plage entre 1:1,5 et 1:2,5, de préférence entre 1:1,8 et 1:2,2.

12. Roue pleine selon l'une quelconque des revendications 1 à 11, **caractérisée en ce que** les premières ouvertures (8) et les deuxièmes ouvertures (9) sont disposées en étant réparties de manière symétrique par rapport à l'axe longitudinal (5) dans la direction périphérique et on obtient ainsi un pas angulaire (16) entre les deux premières ouvertures (8).

13. Roue pleine selon la revendication 12, **caractérisée en ce que** le nombre des premières ouvertures (8) et le nombre des deuxièmes ouvertures (9) est le même.

14. Roue pleine selon la revendication 12 ou 13, **caractérisée en ce que** le nombre des premières et deuxièmes ouvertures (8, 9) correspond respectivement à un nombre premier, de préférence 11, 13 ou 17.

15. Roue pleine selon la revendication 13 ou 14, **caractérisée en ce que** les premières ouvertures (8) sont décalées en direction périphérique par rapport aux deuxièmes ouvertures (9).

16. Roue pleine selon la revendication 15, **caractérisée en ce que** les premières ouvertures (8) sont décalées par rapport aux deuxièmes ouvertures (9) à concurrence de la moitié du pas angulaire (16).

17. Roue pleine selon l'une quelconque des revendications 1 à 16, **caractérisée en ce que** l'espace creux (7) représente un volume symétrique en rotation qui est formé par la rotation d'une section transversale (17) ayant effectué une rotation autour de l'axe longitudinal (5).

18. Roue pleine selon la revendication 17, **caractérisée en ce que** la section transversale (17) ayant effectué une rotation subit un rétrécissement à partir du moyeu (4) dans la direction de la bande de roulement (6).

19. Roue pleine selon la revendication 17 ou 18, **caractérisée en ce que** l'extrémité de la section transversale (17) ayant effectué une rotation, tournée vers la bande de roulement (6), est réalisée sous la forme d'une chaîne de rayons circulaires reliés les uns aux autres en direction tangentielle.

20. Roue pleine selon l'une quelconque des revendications 17 à 18, **caractérisée en ce que** la différence entre un rayon de roue (28) et un rayon maximal (27) de la section transversale (17) ayant effectué une rotation se situe entre 60 mm et 70 mm, de préférence entre 65 mm et 68 mm.

21. Roue pleine selon l'une quelconque des revendications 17 à 20, **caractérisée en ce que** l'étendue maximale de la section transversale (17) ayant effectué une rotation, dans une direction perpendiculaire à l'axe longitudinal (5) se situe dans une plage de 50 % à 60 %, de préférence de 51 % à 58 % du rayon de roue (28).

22. Roue pleine selon l'une quelconque des revendications 1 à 21, **caractérisée en ce que** la surface externe de la zone de la paroi avant (2) en forme d'anneau circulaire, qui présente les premières ouvertures (8), est réalisée pour prendre une configuration plane et comprend un premier angle d'inclinaison (18) formé avec la perpendiculaire à l'axe longitudinal (5).

23. Roue pleine selon l'une quelconque des revendications 1 à 22, **caractérisée en ce que** la surface externe de la zone de la paroi arrière (3) en forme d'anneau circulaire, qui présente les deuxièmes ouvertures (8), est réalisée pour prendre une configuration plane et comprend un deuxième angle d'inclinaison (19) formé avec la perpendiculaire à l'axe longitudinal (5).

24. Roue pleine selon les revendications 22 et 23, **caractérisée en ce que** les angles d'inclinaison (18, 19) se situent dans une plage entre 0° et 10°, de préférence entre 1° et 6°.

25. Roue pleine selon l'une quelconque des revendications 1 à 24, **caractérisée en ce que** la roue pleine est réalisée en une seule pièce sous la forme d'une pièce moulée.

26. Roue pleine selon la revendication 25, **caractérisée en ce qu'**elle est fabriquée à partir de fonte ausferritique à graphite sphéroïdal.

27. Procédé pour la fabrication d'une roue pleine selon l'une quelconque des revendications 1 à 26, **caractérisé en ce que** la roue pleine est fabriquée en une seule pièce sous la forme d'une pièce moulée.
